# EUROPEAN PATENT APPLICATION

(11) **EP 1 416 551 A2**
(43) Date of publication of application: **06.05.2004**
(21) Application number: 03256178.9
(22) Date of filing: 30.09.2003
(51) Int. Cl.: H01M 2/10, H01M 8/24

(54) **Protective container with preventative agent therein**

(30) Priority: 28.10.2002 US 282458
(71) Applicant: Hewlett-Packard Development Company, L.P., Houston, TX 77070 (US)
(72) Inventor: Gore, Makarand P., Corvallis, OR 97330 (US); Mann, L. Chris, Corvallis, OR 97330 (US); Plotkin, Lawrence R., Corvallis, OR 97330 (US); Prasad, Ravi, Corvallis, OR 97330 (US); Peterson, Richard B., Corvallis, OR 97330 (US)
(74) Representative: Jackson, Richard Eric

(57) **Abstract**

A protective case (21, 21') is disclosed that has a preventative agent (24, 32, 64, 66, 68,70) disposed therein for safely housing an object or material (26, 36) with an adverse characteristic such as high heat or volatility. The preventative agent (24, 32, 64, 66, 68, 70) normalizes the adverse characteristic from the object or material (26, 36) before that characteristic can reach the outside environment (30).

## Description

### Reference to Related Applications

This application is a continuation-in-part of U.S. patent application serial number 09/960,180, filed on September 20, 2001, and currently pending.

### Technical Field

This invention relates to a protective case with a protective agent disposed therein for normalizing an adverse characteristic of a material or object received within the protective case.

### Background of the Invention

Fuel cells are electrochemical devices that convert chemical energy of a fuel directly into electrical energy without combustion. Accordingly, they have the potential to offer an economical, light-weight, efficient, and renewable power source that make them particularly attractive for use in a wide variety of applications including electric vehicles and portable electronic devices.

Fuel cell operation is generally well understood. The typical fuel cell operates by extending an electrolyte between two electrodes: one operates as a cathode and the other an anode. Oxygen passes over one electrode and hydrogen over the other, generating electricity, water and heat. In particular, the chemical fuel contains hydrogen, which is fed into the anode of the fuel cell. Oxygen (or air) enters the fuel cell through the cathode. Encouraged by a catalyst, the hydrogen atom splits into a proton and an electron, which take different paths to the cathode. The proton passes through the electrolyte, while the electrons create a separate current that can be used before they return to the cathode where they are reunited with the hydrogen and oxygen to form a molecule of water.

There are a wide variety of fuel cells either currently available or under development that use a variety of different fuels and electrolytes. These different types of fuel cells include phosphoric acid, molten carbonate, solid oxide, aikaiine, direct methanol, and regenerative fuel cells.

Despite the benefits of fuel cells, they have operating characteristics that currently limit their available uses. For example, most fuel cells rely on liquid or semi-viscous fuel that is extremely volatile and could pose a significant safety and environmental risk if it inadvertently leaked from its housing. Moreover, many fuel cells must operate at high temperatures in order to produce desirable levels of electricity. For example, a solid-oxide fuel cell typically operates most efficiently in a temperature range between 450°C to 1000°C. Accordingly, these characteristics essentially prevent fuel cells from being used as replacements to conventional batteries or to power portable electric devices and the like.

Efforts to improve the safety and expand the available uses of fuel cells have primarily focused on attempting to reduce the build-up of explosive gasses within the fuel cell. For example, a prior approach provides a vacuum-type ventilation system that facilitates exhausting explosive gases from the fuel cell structure to the environment, thereby reducing the likelihood of an explosion. Similarly, another approach provides an electrical circuit that detects the onset of an exhaust gas explosion and responds by stopping production of hydrogen gas thereby limiting the size of the explosion. Pettigrew also percolates the exhaust gas through a neutral fluid thereby preventing exploding exhaust gasses from traveling back up through the system and causing further damage.

Despite the benefits of these types of systems, the high operating temperatures of fuel cells, and the environmental and safety concerns associated with inadvertent leaking of the fuel cell's fuel continue to limit the range of applications in which fuel cells can be used.

### Summary of the Invention

The present invention is a protective case for housing an object or material that has an adverse characteristic such as high heat or volatility. The protective case includes a neutralizing agent therein for normalizing the adverse characteristic of the object or material received within the protective case before that characteristics can reach the outside environment.

### Brief Description of the Drawings

FIG. 1 is a schematic diagram of a fuel cell in accordance with an embodiment of the present invention.
FIG. 2 is a schematic diagram of the fuel cell of FIG. 1 showing a possible fracture scenario of a fuel chamber within the fuel cell.
FIG. 3 is a schematic diagram of a fuel cell in accordance with an alternative embodiment of the present invention.
FIG. 4 is a schematic diagram of an exemplar solid oxide fuel cell in accordance with an embodiment of the present invention.

### Detailed Description

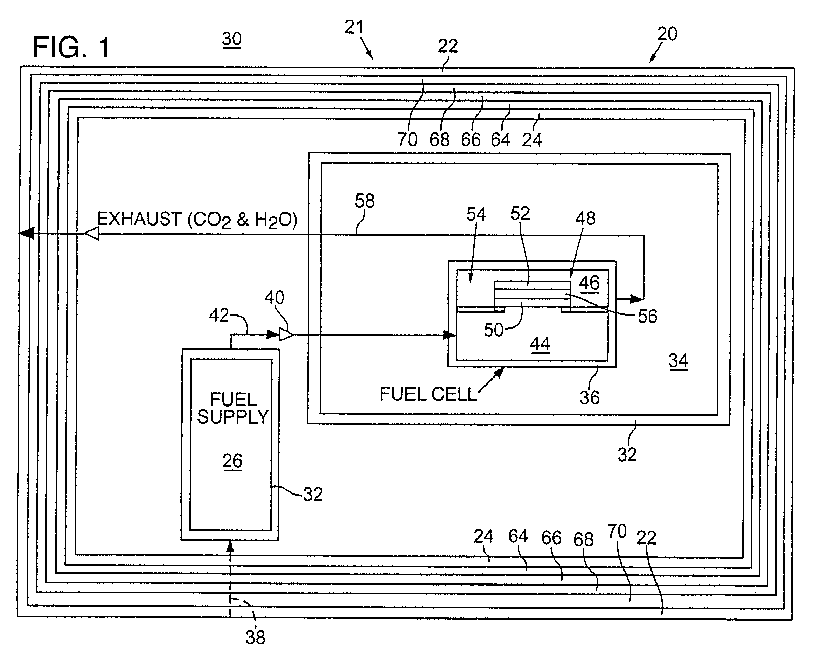

A fuel cell assembly 20 having a protective case 21 that normalizes adverse fuel cell operating characteristics, such as heat generated by the fuel cell or volatility of inadvertently spilled fuel, is disclosed in FIGS 1-4. In addition, protective cases and their uses in other applications are more fully disclosed in U.S. Patent Application Serial Number 09/960,180, filed on September 20, 2001, the disclosure of which is hereby incorporated by reference.

The fuel cell preferably includes a protective outer case 22 and a suitable fuel neutralizing agent 24 to neutralize the volatility of fuel 26 that leaks from the fuel chamber 28 before it escapes to the outside environment 30. More preferably, the fuel chamber 28 structure is designed to fracture before the structure of the outer case 22 during an inadvertent impact, thereby allowing the fuel 26 to be fully neutralized before escaping into the outside environment 30.

Also, the heat generating portions of the fuel cell and the portions of the fuel cell that require high heat to operate effectively are encircled in a layer of thermal insulation 32 to form a heat chamber 34 thereby maintaining desirable high temperatures within the heat chamber 34 while maintaining relatively cool temperatures outside of the heat chamber 34.

Each of these components is discussed in greater detail below.

### A. Fuel Neutralizing Protective Case

As shown in FIG. 1, a schematic exemplar fuel cell assembly 20 is shown with a protective case 21 according to an embodiment of the present invention. The fuel cell assembly 20 includes a fuel chamber 28 containing a fuel 26 having hydrogen. The fuel chamber 28 is in fluid communication with a fuel cell 36, and may include a filling port 38 that allows fuel 26 in the fuel chamber 28 to be replenished as needed. Otherwise, the fuel chamber 28 is sealed and operably secured within the protective case 21 to retain fuel 26 within the fuel chamber 28. Preferably, a check valve 40 or the like is disposed in the fluid path 42 between the fuel chamber 28 and the fuel cell 36.

The fuel cell 36 includes a fuel portion 44 and an oxygen or air portion 46 separated by a proton exchange structure 48. The proton exchange structure 48 includes an anode 50 operably engaging the fuel 26 and a cathode 52 operably engaging the oxygen or air 54 with a proton exchange member, or electrolyte 56, operably secured between the anode 50 and cathode 52. Encouraged by a catalyst, the hydrogen atom splits into a proton and an electron, which take different paths to the cathode 52. The proton passes through the electrolyte 56, while the electrons create a separate current that can be used before they return to the cathode 52 where they are reunited with the hydrogen and oxygen to form a molecule of water. Typical by-products of this process include carbon dioxide (C0₂), and water (H₂0), which are usually exhausted through an exhaust path 58 to the outside environment 30 as shown, and heat. Preferably, thermal insulation 32 surrounds the heat generating portions of the fuel cell 36, thereby preventing heat from escaping to the outside environment 30 and also preventing adverse interference with heat sensitive components within the protective case 21.

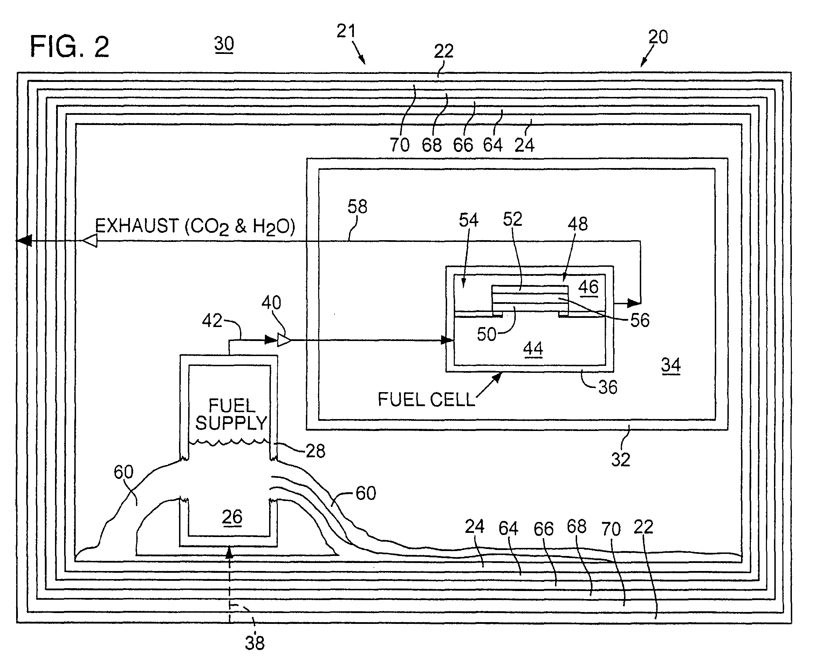

As shown in FIG. 1, a suitable fuel neutralizing agent 24 is positioned outside of the fuel chamber 28 containing the fuel 26, but inside the outer case 22. The fuel neutralizing agent 24 serves as a chemical antidote that chemically reacts with the fuel 26 to render it substantially stable and inert. Preferably, the fuel neutralizing agent 24 is operably secured to the outer case 22, such as by forming a layer of fuel neutralizing agent 24 adjacent to the outer case 22. Accordingly, if the fuel chamber 28 or related fuel fluid path 42 lines fracture or leak as shown in FIG. 2, the spilled fuel 60 will be rendered substantially inert by the fuel neutralizing agent 24 before escaping to the outside environment 30.

Preferably, the outer case 22 is sealed to prevent inadvertent leaking of contents from within the outer case 22, such as spilled fuel 60 that has escaped from the fuel chamber 28. More preferably, the fuel chamber 28 is slightly less durable and less fracture resistant than the outer case 22 so that in the event an inadvertent impact is applied to the fuel cell assembly 20 and the force is so great as to damage the fuel cell assembly 20, the fuel chamber 28 will fracture or leak before the outer case 22, thereby allowing more time for the fuel 26 to interact with the neutralizing agent 24.

The particular fuel neutralizing agent 24 to be used depends on the fuel selected for use with the fuel cell 36. For example, metal hydride fuels, such as sodium borohyrdride (Na BH₄), aluminohydride (LiAlH₄), and the like contain hydrogen and are economical and readily available. However, these compounds are extremely caustic and volatile if released to the environment or inadvertently mixed with common household products. Accordingly, metal hydride fuel cells have previously not been considered viable candidates for use in portable fuel cells and the like.

However, metal hydride fuels can be readily neutralized with known neutralizing agents 24 in the event they inadvertently leak from their fuel chambers 28. These neutralizing agents result in a neutral, relatively environmentally friendly, and safe compound that posses little risk of explosion or the like. Moreover, these neutralizing agents can be readily applied or otherwise operably secured within a portable fuel cell outer shell. Examples of the appropriate neutralizing agent to be used with a particular metal hydride fuel are provided below:

| Fuel Source | Neutralizing Agent |
|---|---|
| Sodium Borohydride (Na BH₄) | Aldehyde with carbonyl reducing groups |
| Alumino hydrides | Ketones, Esters, Eldehydes, and Carboxides. |

An example neutralizing reaction for Metal hydride (MH) fuel is provided below:

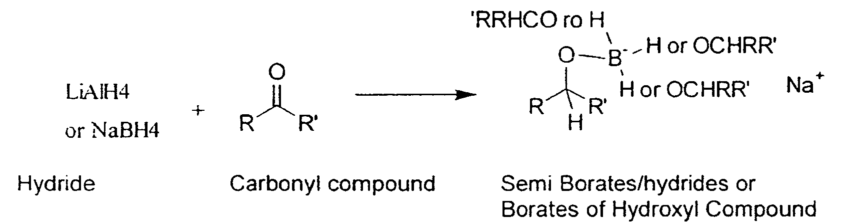

R and R' can be alkyl aryl, hydroxy alkyl, H or complex aldehydes like oxidized cellulose.

If desired, the resulting "borate" salt compound can be further neutralized as follows:

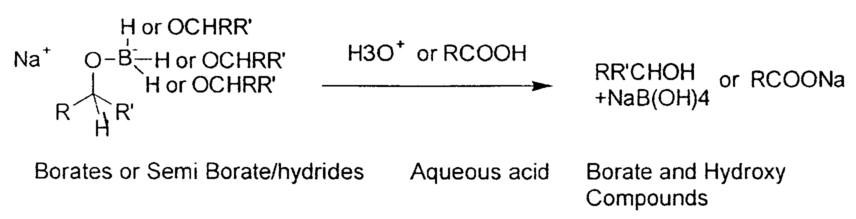

Similar neutralizing reactions for other fuels are generally well understood.

Preferably, the neutralizing agent 24 is polymerized to be received within an inner surface of the outer case 22 as shown in FIG. 1.

More preferably, the outer case 22 also includes one or more of the following materials for further improving the safety of the fuel cell:
1. A foaming agent layer 64 such as carbonates (for acidic fuels) and surfactants for physically containing liquid or vapor that escapes from the fuel camber. Examples of acceptable foaming agents include, without limitation, sodium bicarbonate, ammonium bicarbonate, polyolefin foams, and other alkali metal carbonates.
   The foaming agent layer 64 may also be a polymer foaming material. Such material is selected to form a hard polymer when contacted by the contained material to essentially forma sealant that is impermeable to the contained material. Initiation of polymerization may be accomplished through either the contained material or an initiator included within the preventative agent. Specific examples of polymeric agents include without limitation, cyanoacrylates as well as other polymerizable compounds. Further, cyanoacrylate monomers include a-cyanoacrylate esters and corresponding initiators, which may include amine, sodium hydroxide, sodium carbonate, and other compatible Lewis bases. Self-initiation may also occur via free radicals.
2. A fire/reaction retardant layer 66 such as bromides and phosphines to prevent ignition or combustion of any such escaped liquid or vapor. Examples of acceptable fire/reaction retardant materials include, without limitation, brominated polystyrenes, bromine chloride, phosphate salts, phosphate esters, nitrogen-containing phosphorus derivatives, phosphoric acid derivatives, phosphinates, phosphites, phosphonites, phosphinites, and phosphines. Other compounds can include inorganic compounds such as antimony compounds like antimony trioxide, antimony pentoxide, and sodium antimonite, boron compounds such as zinc borate, boric acid, and sodium borate, alumina trihydrate and molybdenum oxides, halogenated compounds such as decabromodiphenyl oxide, chlorendic acid, tetrabromophthalic anhydride, and similarly halogenated compounds. The halogenated compounds, especially chlorinated compounds, are often combined with inorganic compounds, especially antimony-, iron-, cobalt-, molybdenum-, and other metal-containing compounds, to produce fire-retarding effects.
3. A gelling agent layer 68 such as alginate, polyacrylate salt, and surfactants such as Laurel Glutamic Butryamide for combining with escaped fuel to form a viscous gel and thereby limit the spread and vaporization of the escaped fuel. Additional exemplar gelling agents include, without limitation, laurol glutamic butylamide, carboxymethyl cellulose, cellulose ether, polyvinylpyrolidone, starch, dextrose, gelatine, sterate and sterate salts, lamallae and liposome or vesicle forming surfactants, lecithins, pectin, coagulants such as sulfate salts, and fluid thickeners such as substituted succinic acids or polyoxyalkylene reaction products, may be included such that upon contact with the contained material a gel is formed which substantially immobilizes the contained material.
4. An adsorbent layer 70, such as vermiculite and high porous clay, to adsorb fuel and limit evaporation and further assist with dispersion of the fuel. Additional exemplar adsorbents include, without limitation, polyurethane foams. fibrous cellulose, fibrous polyacrylates, fibrous acrylic polymers, fibrous thermoplastics, plastic microspheres, glass micropheres, and ceramics that adsorb and immobilize the contained material and prevent evaporation and/or uncontrolled release.

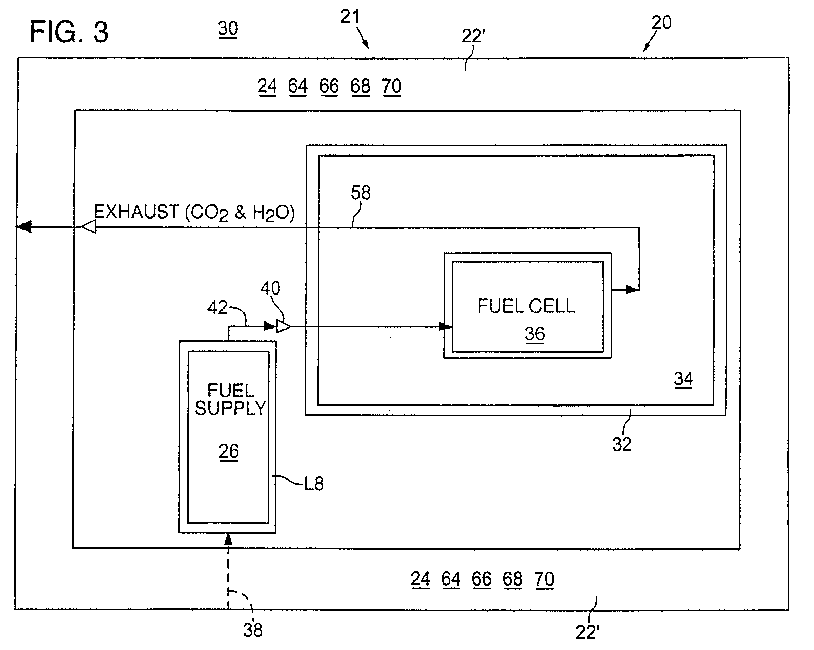

These additional materials may be individual layers within the outer case 22 as shown in FIG. 1, or integrally blended into the outer case 22' material during manufacturing of the outer case 22' as shown in FIG. 3.

### B. Thermal protective case

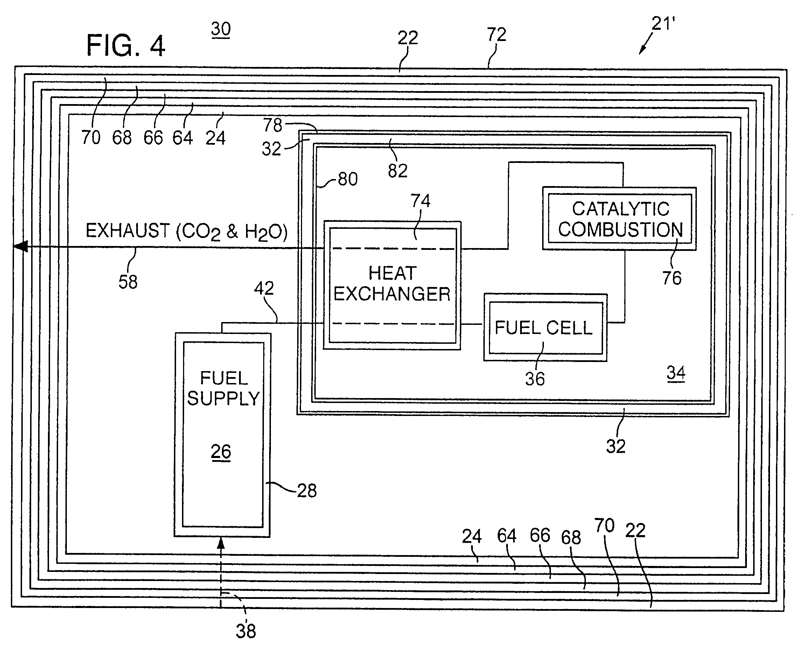

As shown in FIG. 4, a solid-oxide fuel cell 36' received within a protective case 21' is disclosed. Solid-oxide fuel cells use a hard, ceramic electrolyte 56, and operate at temperatures up to 1000°C. Accordingly, they are have previously not been considered viable candidates for use in portabie fuel cells, personal electronic devices, and the like.

In order for solid oxide fuel cells to operate effectively in this environment, the exhaust from the fuel cell must be effectively cooled, and the entering fuel must be heated to an effective operational temperature. Moreover, the fuel cell 36' and related components must remain at high temperature, while heat sensitive portions of the fuel cell and the exterior surface 72 of the protective case 21' remain cool. Accordingly, in this embodiment, the layer of thermal insulation 32 defines a heat chamber 34 within the protective case 21' as shown in FIG. 4. Heat generating portions of the fuel cell and the portions of the fuel cell that require high heat to operate effectively are encircled in a layer of thermal insulation 32, thereby maintaining desirable temperatures both within the heat chamber 34 and outside the heat chamber 34.

Fuel 26 travels from the fuel chamber 28 into the heat chamber 34 where it passes through a heat exchanger 74 to the fuel cell 36' to produce electricity, carbon dioxide, water and heat. Spent fuel and other exhaust travels from the fuel cell 36' to a catalytic combustion chamber 76 where caustic and dangerous byproducts of the spent fuel are neutralized. The exhaust is then passed through the heat exchanger 74 whereby it is cooled, while simultaneously heating new incoming fuel 26, then exhausted to the environment through an exhaust path 58 as harmless, and relatively cool gas.

The layer of thermal insulation 32 is able to prevent temperatures as high as 1000°C within the heat chamber 34 from escaping to the remaining portions within the protective case 21'. Preferably, the layer of thermal insulation 32 is also thin and lightweight so as to allow the fuel cell's protective case 21' and related components to remain relatively small for use in portable electronic devices and the like.

One material having these properties is a highly porous, low-density, high temperature resistant material, such as silica, ceramic or inorganic materials, and commonly known by those skilled in the art as "aerogel." Usually, the preferred aerogel material is formed from silica.

The aerogel is effective as a thermal insulation 32 at atmospheric pressure. However, it is more effective when sealed in a vacuum. Accordingly, it is preferably to include a structure for hermetically sealing the aerogel to form the hot chamber. As shown in FIG. 4, one known structure for sealing the aerogel includes placing as external layer 78 of sealing material around the thermal insulation 32 and an internal layer 80 of sealing material adjacent to the inside surface of the thermal insulation 32, thereby forming a hermetically sealable chamber 82 for receiving aerogel therein.

The aerogel is then inserted into the hermetically sealable chamber 82, or applied as the sealable chamber 82 is formed, and then sealed within the sealable chamber 82. If needed, the sealable chamber 82 can include a support frame (not shown) to maintain the appropriate thickness of the sealable chamber 82 containing the aerogel.

Alternatively, the aerogel itself can be formed to support the sealable chamber 82 when a vacuum is applied to the sealable chamber 82. For example, the aerogel may be machined into a powder then compacted to form sheets capable of supporting a compressive load. The sheets of aerogel would be received within the sealable chamber 82 and then sealed, thereby supporting the sealable chamber 82 when the vacuum is applied to the sealable chamber 82.

The sealing material for forming the external and internal layers 78, 80 is preferably a commercially available polymeric barrier film. More preferably, the sealing material is heat sealable to form the hermetic seal as described, and it also includes a surface metal film to improve barrier performance. Alternatively, other packaging materials can be used such as thin metal packaging having hermetic seals. The internal layer and support structure (if applicable) are selected from those groups of materials that are able to withstand the high temperatures produced by the fuel cell without compromising the sealable chamber's vacuum.

### C. Alternative Embodiments

Having here described preferred embodiments of the present invention, it is anticipated that other modifications may be made thereto within the scope of the invention by individuals skilled in the art. For example, in cases where the operating temperature of the fuel cell 36 is much less than about 500°C, and therefore the thermal insulating characteristics of aerogel need not be required as the thermal insulation 32, acceptable thermal insulating characteristics may be achieved by filling the sealable chamber 82 with a high molecular weight gas, such as argon or xenon, and placing the sealable chamber at a very slight vacuum.

Thus, although several embodiments of the present invention have been described, it will be appreciated that the spirit and scope of the invention is not limited to those embodiments, but extend to the various modifications and equivalents as defined in the appended claims.

## Claims

1. A protective container (21, 21 ') containing a material (26, 36) having an adverse characteristic and protecting against exposure to the adverse characteristic, comprising:
a durable outer case (22, 22');
an inner case (28, 34) containing the material (26, 36), said inner case (28, 34) being less durable than the outer case (22, 22'); and,
a layer of preventative agent (24, 32, 64, 66, 68, 70) disposed between the inner and outer cases (28, 34, 22, 22') which is sufficient to normalize the adverse characteristic.

2. The protective container (21, 21') of claim 1, wherein:
the protective container (21, 21') houses a fuel cell (36);
the material (26, 36) is fuel (36) for the fuel cell (36);
said inner case (28, 34)includes a fuel reservoir (28) for receiving the fuel (36) therein; and,
said preventative agent is a fuel neutralizing agent (24).

3. The protective container (21, 21') of claim 2, wherein said fuel (36) is a metal hydride.

4. The protective container (21, 21') of claim 3, wherein said fuel (36) is Sodium Borohydride and said neutralizing agent (24) is Aldehyde with carbonyl reducing groups.

5. The protective container (21, 21') of claim 3, wherein said fuel (36) is Alumino hydride and said neutralizing agent (24) is selected from the group consisting of Ketones, Esters, Aldehydes, and Carboxides.

6. The protective container (21, 21') of claim 2, further inducting a second preventative agent (64, 66, 68, 70) disposed between said inner and outer cases (28, 34, 22, 22'), said second preventative agent (64, 66, 68. 70) selected from the group consisting of a foaming agent (64), a fire/reaction retardant (66), a gelling agent (68), and an adsorbent (70).

7. The protective container (21, 21') of claim 6, wherein said fuel neutralizing agent (24) and said second agent (64, 66, 68, 70) are integrally blended together.

8. The protective container (21, 21') of claim 1, wherein:
the material is a fuel cell (36) operating at high heat;
the inner case (34) houses the fuel cell (36); and,
said preventative agent is thermal insulation (32) between said inner case (24) and said outer case (22').

9. The protective container (21, 21') of claim 8, wherein said thermal insulation (32) is a high porous, low-density, high temperature resistant material.

10. The protective container (21, 21') of claim 9, wherein said high porous, low-density, high temperature resistant material is aerogel.

11. The protective container (21, 21') of claim 10, wherein said aerogel is received within a hermetically sealed chamber (82) and said sealed chamber (82) maintains said aerogel within a vacuum.
